# EUROPÄISCHE PATENTANMELDUNG

(11) **EP 3 412 195 A1**
(43) Veröffentlichungstag der Anmeldung: **12.12.2018**
(21) Anmeldenummer: 18174272.7
(22) Anmeldetag: 25.05.2018
(51) Int. Cl.: A47L 15/42, F16L 33/207

(54) **SCHLAUCHKUPPLUNG MIT FILTERSIEB**

(30) Priorität: 06.06.2017 DE 102017112410
(71) Anmelder: Neoperl GmbH, 79379 Müllheim (DE)
(72) Erfinder: Kury, Werner, 79379 Müllheim (DE)
(74) Vertreter: Mertzlufft-Paufler, Cornelius

(57) **Zusammenfassung**

Die Erfindung betrifft eine Schlauchleitung (1) mit einem hülsenförmigen Schlauchanschluss (3), der mit einem als Anschlussstutzen (4) ausgebildeten ersten Schlauchanschluss-Teilbereich durch eine, an einem Stirnende (3) des Schlauches (2) vorgesehene Schlauchöffnung hindurch in einen angrenzenden Schlauchendbereich des Schlauches (2) vorsteht und der (4) einen über das Stirnende (3) des Schlauches (2) vorstehenden zweiten Schlauchanschluss-Teilbereich (6) hat, welcher (6) an seinem freien Stirnende einen umlaufenden und umfangsseitig vorstehenden Dichtungshaltekragen (7) aufweist, wobei am Umfang des zweiten Schlauchanschluss-Teilbereiches (6) ein Ringflansch (8) vorgesehen ist, den eine Überwurfmutter (9) hintergreift und zwischen dem und dem Dichtungshaltekragen ein Dichtring (10) vorgesehen ist. Für die erfindungsgemäße Schlauchleitung (1) ist kennzeichnend, dass diese (1) ein Filtersieb (12) hat, dass die Schlauchleitung (1) ein Filtersieb (12) hat, das (12) an seinem dem Schlauchanschluss (4) zugewandten Stirnendbereich am Dichtungshaltekragen (7) des Schlauchanschlusses (4) montiert ist (vgl. Fig. 1).

## Beschreibung

Die Erfindung betrifft eine Schlauchleitung mit einem flexiblen Schlauch, mit einem hülsenförmigen Schlauchanschluss, der mit einem als Anschlussstutzen ausgebildeten ersten Schlauchanschluss-Teilbereich durch eine, an einem Stirnende des Schlauches vorgesehene Schlauchöffnung hindurch in einen angrenzenden Schlauchendbereich des Schlauches vorsteht und der einen, über das Stirnende des Schlauches vorstehenden zweiten Schlauchanschluss-Teilbereich hat, welcher an seinem freien Stirnende einen umlaufenden und umfangsseitig vorstehenden Dichtungshaltekragen aufweist, wobei am Umfang des zweiten Schlauchanschluss-Teilbereiches ein Ringflansch vorgesehen ist, den eine Überwurfmutter hintergreift und zwischen dem und dem Dichtungshaltekragen ein Dichtring vorgesehen ist.

Die Erfindung befasst sich auch mit einem Filtersieb für eine solche Schlauchleitung.

Schlauchleitungen der eingangs erwähnten Art sind bereits in den verschiedensten Ausführungen bekannt. So werden solche Schlauchleitungen beispielsweise verwendet, um eine sanitäre Auslaufarmatur oder dergleichen Wasserverbrauchsstelle mit einem wandseitig vorgesehenen Eckventil zu verbinden (vgl. EP 2 940 364 A1). In sanitären Wasserleitungen besteht jedoch das Problem, dass der durch eine Wasserleitung durchfließende Wasserstrom Kalkreste und Schmutzpartikel mitreißen kann, die anschließend im weiteren Verlauf der Wasserleitung oder am Auslaufende vorgesehene Funktionseinheiten, die beispielsweise die maximale Durchflussleistung einregeln und/oder das ausströmende Wasser belüften und zu einem homogenen, nichtspritzenden und perlend-weichen Wasserstrahl formen sollen, verschmutzen und in ihrer Funktion beeinträchtigen können.

Solche Funktionseinheiten, die beispielsweise als Strahlregler, gegebenenfalls mit vorgeschaltetem Durchflussmengenregler, oder als Strahlbelüfter, ausgebildet und am Wasserauslauf einer sanitären Auslaufarmatur montierbar sind, werden regelmäßig mit einem zuströmseitigen Filtersieb ausgestattet, um derartige Schmutzpartikel auf der Zuströmseite dieser Funktionseinheiten auszufiltern. Nicht in allen Fällen steht jedoch der Platz zur Verfügung, um entsprechende Funktionseinheiten mit einem Filtersieb auszustatten.

Man hat daher auch eine im Verlauf einer Wasserleitung vorgesehene Anschlussverschraubung geschaffen, bei der zwischen benachbarten Stirnflächen von zwei, mit der Anschlussverschraubung zu verbindenden Leitungsteilen ein Dichtring einlegbar ist, der in der Ringöffnung seiner Ringform ein Sieb aufweist, das mit einem umbördelten Mantelbereich reibschlüssig oder formschlüssig an dem die Ringöffnung umgrenzenden Innenumfang des Dichtrings gehalten ist.

So kennt man aus der DE 297 03 335 U1 und der DE 10 2016 012 646.9 bereits Funktionseinheiten, die als Rückflussverhinderer ausgebildet und im Verlauf einer Wasserleitung montierbar sind. Die vorbekannten Rückflussverhinderer weisen jeweils ein Filtersieb auf, das an der zuströmseitigen Stirnseite dieser Rückflussverhinderer lösbar verrastbar ist. Dabei sind jedoch die Filtersiebe nicht ohne den zugeordneten Rückflussverhinderer verwendbar.

Es besteht daher insbesondere die Aufgabe, eine Schlauchleitung sowie ein Filtersieb der eingangs erwähnten Art zu schaffen, die auch nachträglich noch den Einbau einer Filterfunktion gestatten, ohne dass ein zusätzlicher Bearbeitungsaufwand am Schlauchanschluss erforderlich wäre und ohne dass das dazu benötigte Filtersieb nur mit großem Aufwand herstellbar ist.

Die erfindungsgemäße Lösung dieser Aufgabe besteht bei der Schlauchleitung der eingangs erwähnten Art insbesondere darin, dass die Schlauchleitung ein Filtersieb hat, das an seinem dem Schlauchanschluss zugewandten Stirnendbereich am Dichtungshaltekragen des Schlauchanschlusses montiert ist.

Die erfindungsgemäße Schlauchleitung weist einen flexiblen Schlauch auf, der an zumindest seinem einen Schlauchende mit einem Schlauchanschluss verbunden ist. Der hülsenförmige Schlauchanschluss weist einen als Anschlussstutzen ausgebildete ersten Schlauchanschluss-Teilbereich auf, der durch eine an dem Schlauchende vorgesehene Schlauchöffnung hindurch in einen angrenzenden Schlauchendbereich des Schlauches vorsteht. Der Schlauchanschluss hat auch einen zweiten, über das Stirn- oder Schlauchende des Schlauches vorstehenden Schlauchanschluss-Teilbereich, der an seinem freien Stirnende einen umlaufenden und umfangsseitig vorstehenden Dichtungshaltekragen aufweist. Am Umfang des zweiten Schlauchanschluss-Teilbereiches ist ein Ringflansch vorgesehen, den eine Überwurfmutter hintergreift und zwischen dem und dem Dichtungshaltekragen ein Dichtring vorgesehen ist. Um den Schlauchanschluss an einem gegenüberligenden Schlauchanschluss eines benachbarten Leitungsabschnitts befestigen zu können, weist die Überwurfmutter ein Befestigungsgewinde auf, das mit einem komplementären Gegengewinde am Schlauchanschluss des benachbarten Leitungsabschnitts verschraubbar ist. Der erfindungsgemäßen Schlauchleitung ist ein Filtersieb zugeordnet, das bei Bedarf auch nachträglich noch verwendet werden kann. Da dieses Filtersieb an seinem dem Schlauchanschluss zugewandten Stirnendbereich am Dichtungshaltekragen des Schlauchanschlusses montiert werden kann, ist der Schlauchanschluss der erfindungsgemäßen Schlauchleitung mit und auch ohne das Filtersieb vorteilhaft einsetzbar. Auf das Filtersieb kann jedoch bei Bedarf zurückgegriffen werden, wenn im Fluid mitgerissene Schmutzpartikel im Bereich des Schlauchanschlusses ausgefiltert werden sollen. Es ist ein besonderer Vorteil der erfindungsgemäßen Schlauchleitung, dass diese Schlauchleitung bei Bedarf auch nachträglich noch mit einem Filtersieb nachrüstbar ist. Dabei kann das Filtersieb so ausgestaltet werden, dass es mit geringem Aufwand, gegebenenfalls auch im Wege der automatisierten Montage, montierbar ist. Dadurch können bei der erfindungsgemäßen Schlauchleitung die Produktions- und Montagekosten, die bei der Aus- oder Nachrüstung mit einem Filtersieb verbunden sind, wesentlich reduziert werden. Für das Filtersieb sind dabei einfache Herstellungsverfahren denkbar, wobei das Filtersieb auch eine große Durchströmfläche bieten kann, die eine hohe Durchflussleistung auch im Bereich des Schlauchanschlusses der erfindungsgemäßen Schlauchleitung erlaubt.

Damit das Filtersieb mit einer vergleichsweise großen Filterfläche ausgebildet werden kann, werden Ausführungen bevorzugt, bei denen das Filtersieb als Hutfilter ausgebildet ist und zusätzlich oder stattdessen das Filtersieb außenumfangsseitig eine zylindrische Filterfläche aufweist.

Um die einfache Montage des Filtersiebs am Schlauchanschluss der erfindungsgemäßen Schlauchleitung noch zusätzlich zu begünstigen, ist es vorteilhaft, wenn das Filtersieb an seinem dem Schlauchanschluss zugewandten Stirnendbereich zumindest ein Halteelement hat, das mit einer innenliegenden Halterille oder Haltenut den Dichtungshaltekragen hintergreift.

Dabei kann in einer Ausführung gemäß der Erfindung vorgesehen sein, dass an dem dem Schlauchanschluss zugewandten Stirnende des Filtersiebes in Umfangsrichtung voneinander beabstandete Federstege vorstehen, die einen Rastvorsprung aufweisen, mit welchem die Federstege am Dichtungshaltekragen des Schlauchanschlusses montiert werden können. Eine bevorzugte Ausführungsform, die den mit der Herstellung des Filtersiebes verbundenen Aufwand noch zusätzlich reduziert, sieht demgegenüber vor, dass das Halteelement als ein am Filtersieb angeformter Ringsockel ausgebildet ist, der an dem Ringinnenumfang seiner Ringform eine umlaufende Haltenut hat.

Um die erfindungsgemäße Schlauchleitung, ihren Schlauchanschluss und das daran montierte Filtersieb bei Bedarf warten und von ausgefilterten Schmutzpartikeln säubern zu können, ist es vorteilhaft, wenn das Filtersieb am Dichtungshaltekragen lösbar montierbar ist.

Das Filtersieb der erfindungsgemäßen Schlauchleitung weist eine große Filterfläche auf und das Filtersieb setzt dem durchfließenden Fluid auch bei größeren Wartungsintervallen und entsprechender Verschmutzung nur einen vergleichsweise geringen hydraulischen Widerstand entgegen, wenn das Filtersieb als Hutfilter ausgebildet ist. Demgegenüber lässt sich ein Filtersieb, das außenumfangsseitig eine zylindrische Filterfläche aufweist, besonders einfach und kostengünstig, beispielsweise als Kunststoffspritzgussteil, herstellen.

Dabei sieht eine bevorzugte Ausführungsform gemäß der Erfindung vor, dass das als Hutfilter ausgebildete Filtersieb zumindest in einem dem Schlauchanschluss abgewandten Teilbereich kegel- oder kegelstumpfförmig ausgebildet sein kann. Weist das als Hutfilter ausgebildete Filtersieb einen, dem Schlauchanschluss abgewandten kegel- oder kegelstumpfförmigen Teilbereich auf, kann das Filtersieb mit diesem kegel- oder kegelstumpfförmigen Teilbereich auch in den lichten Leitungsinnenraum des benachbarten Leitungsabschnitts vorstehen.

Ist das Filtersieb außenumfangsseitig mit einer zylindrischen Filterfläche ausgestattet, kann das Filtersieb mit seinem die Filterflächen aufweisenden Teilbereich ebenfalls in den lichten Leitungsinnenraum des benachbarten Leitungsabschnitts vorstehen, wenn der die zylindrischen Filterflächen aufweisende Teilbereich des Filtersiebes an den lichten Querschnitt der Schlauchleitung angepasst ist.

Das erfindungsgemäß vorgesehene Filtersieb beeinträchtigt nicht die Anschlussverschraubung des Schlauchanschlusses gegenüber dem benachbarten Leitungsabschnitt, wenn der maximale Außenumfang des Filtersiebes durch den an dem dem Schlauchanschluss zugewandten Stirnende des Filtersiebes angeordneten Ringsockel gebildet ist.

Dabei sieht eine bevorzugte Ausführungsform gemäß der Erfindung, die sich mit vergleichsweise geringem Aufwand herstellen lässt, vor, dass der Ringsockel flanschförmig an das Filtersieb angeformt ist.

Eine Weiterbildung gemäß der Erfindung sieht vor, dass der maximale Durchmesser des Filtersiebes im Bereich des Ringsockels so bemessen ist, dass der Dichtring eine zwischen dem Ringsockel des Filtersiebes und dem Innenumfang der Überwurfmutter angeordnete Ringzone aufweist, an welche Ringzone ein ring- oder hülsenförmiges Stirnende eines benachbarten Leitungsabschnitts dicht anlegbar ist. Bei einer solchen weiterbildenden Ausführungsform wird stets eine gute Abdichtung im Bereich der Anschlussverschraubung gewährleistet, und zwar unabhängig davon, ob an dem Dichtungshaltekragen des Schlauchanschlusses der erfindungsgemäßen Schlauchleitung ein Filtersieb angreift.

Ein bevorzugter Anwendungsbereich der erfindungsgemäßen Schlauchleitung sieht vor, dass die Schlauchleitung eine sanitäre Schlauchleitung ist, die eine Auslaufarmatur oder dergleichen Wasserverbrauchsstelle mit einem Eckventil verbindet.

Weiterbildungen gemäß der Erfindung ergeben sich aus der nachfolgenden Beschreibung eines bevorzugten Ausführungsbeispiels in Verbindung mit den Ansprüchen sowie der Zeichnung. Nachstehend wird die Erfindung anhand eines bevorzugten Ausführungsbeispieles noch näher beschrieben.

Es zeigt:
- Fig. 1: eine Schlauchleitung mit einem flexiblen Schlauch, der an zumindest einem Schlauchende einen hier teilweise längs geschnittenen Schlauchanschluss hat, mit welchem die Schlauchleitung mit dem Schlauchanschluss eines benachbarten Leitungsabschnitts verbunden ist,
- Fig. 2: die in einer perspektivischen Draufsicht gezeigte Schlauchleitung aus Fig. 1 mit ihrem Schlauchanschluss, dem ein am Schlauchanschluss lösbar befestigbares Filtersieb zugeordnet ist,
- Fig. 3: die Schlauchleitung aus den Fig. 1 und 2 in einer auseinandergezogenen perspektivischen Einzelteildarstellung,
- Fig. 4: ein weiteres Ausführungsbeispiel einer Schlauchleitung, die sich von der in den Fig. 1 bis 3 gezeigten Schlauchleitung durch das am Schlauchanschluss verwendete Filtersieb unterscheidet, welches Filtersieb hier eine zylindrische Siebfläche aufweist,
- Fig. 5: die in einer perspektivischen Draufsicht gezeigte Schlauchleitung aus Fig. 4 mit ihrem Schlauchanschluss, an dem das Filtersieb lösbar befestigbar ist, und
- Fig. 6: die Schlauchleitung aus den Fig. 4 und 5 in einer auseinandergezogenen perspektivischen Einzelteildarstellung.

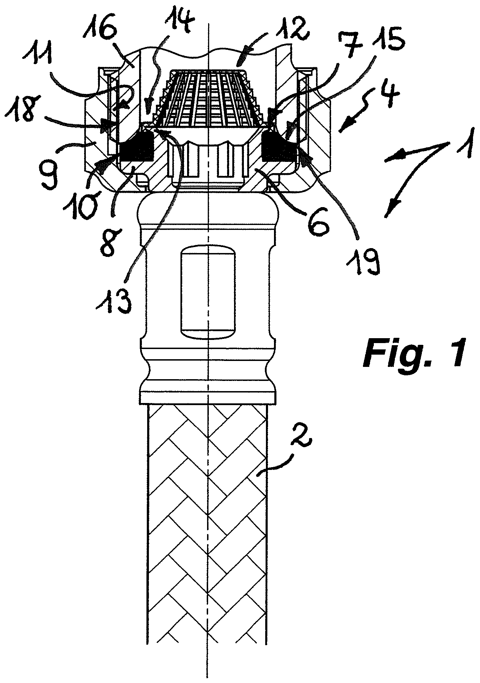

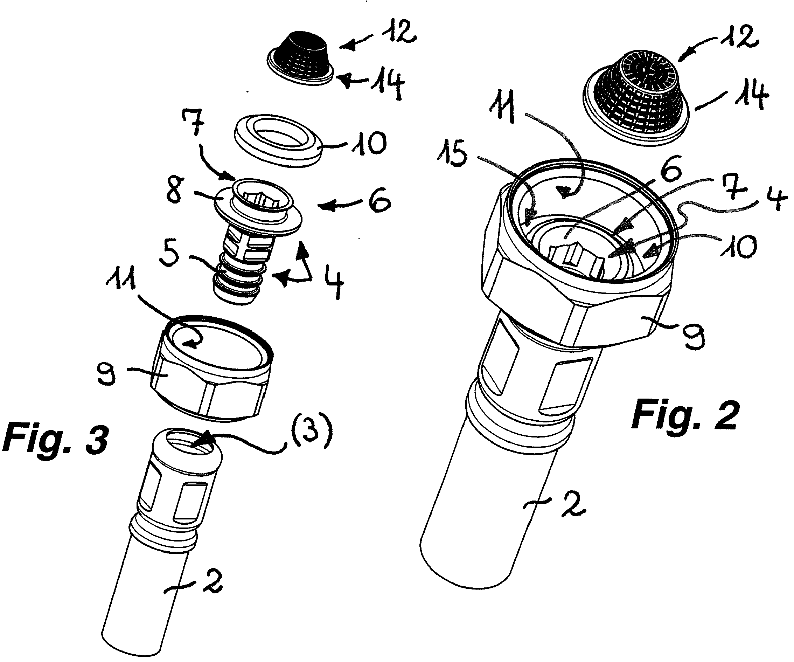

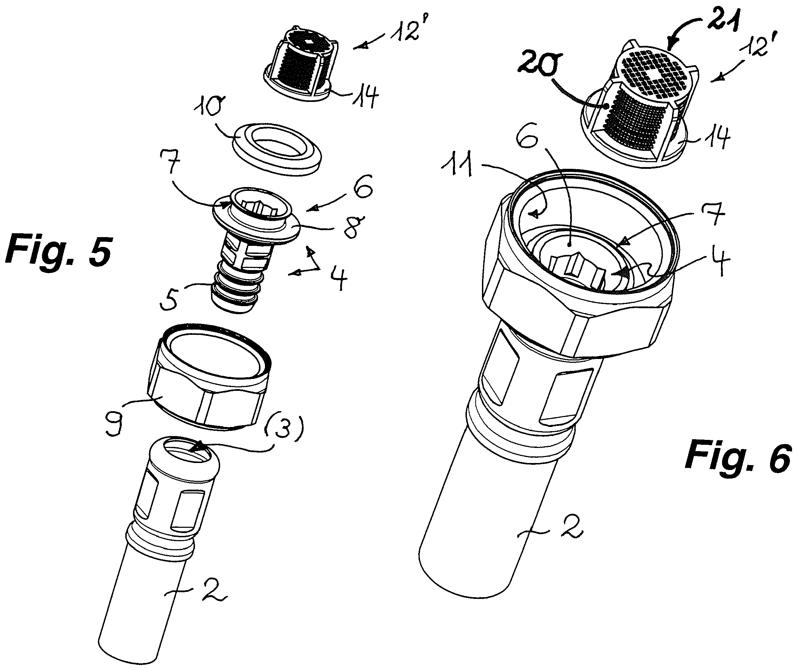

In den Figuren 1 bis 3 und 4 bis 6 sind zwei Ausführungen 1, 1' einer Schlauchleitung mit einem flexiblen Schlauch 2 dargestellt. Die Schlauchleitungen 1, 1' weisen jeweils einen flexiblen Schlauch 2 auf, der an zumindest seinem einen Schlauchende 3 mit einem Schlauchanschluss 4 verbunden ist. Der hülsenförmige Schlauchanschluss 4 weist einen als Anschlussstutzen 5 ausgebildeten ersten Schlauchanschluss-Teilbereich auf, der durch eine an dem Schlauchende 3 der Schlauchleitungen 1, 1' vorgesehene Schlauchöffnung hindurch in einen angrenzenden Schlauchendbereich des Schlauches 2 vorsteht. Der Schlauchanschluss 4 hat auch einen zweiten, über das Stirn- oder Schlauchende 3 des Schlauches 2 vorstehenden Schlauchanschluss-Teilbereich 6, der an seinem freien Stirnende einen umlaufenden und umfangsseitig vorstehenden Dichtungshaltekragen 7 hat. Am Umfang des zweiten Schlauchanschluss-Teilbereiches 6 ist ein Ringflansch 8 vorgesehen, den eine Überwurfmutter 9 hintergreift und zwischen dem und dem Dichtungshaltekragen 7 ein Dichtring 10 vorgesehen ist.

Um den Schlauchanschluss 4 der Schlauchleitungen 1, 1' an einem gegenüberliegenden Schlauchanschluss 16 eines benachbarten Leitungsabschnitts befestigen zu können, weist die Überwurfmutter 9 ein Befestigungsgewinde 11 auf, das mit einem komplementären Gegengewinde 18 am Schlauchanschluss 16 des benachbarten Leitungsabschnitts verschraubbar ist. Das Befestigungsgewinde 11 an der Überwurfmutter 9 kann als Außengewinde ausgebildet sein. In dem hier dargestellten Ausführungsbeispiel hat die Überwurfmutter 9 ein Innengewinde, das in ein Außengewinde am Schlauchanschluss 16 des benachbarten Leitungsabschnitts einschraubbar ist.

Den Schlauchleitungen 1, 1' ist ein Filtersieb 12 oder 12' zugeordnet, das bei Bedarf auch nachträglich noch montiert werden kann. Da dieses Filtersieb 12, 12' an seinem dem Schlauchanschluss 4 zugewandten Stirnendbereich am Dichtungshaltekragen 7 montiert werden kann, ist der Schlauchanschluss 3 der erfindungsgemäßen Schlauchleitung 1, 1' mit und ohne das Filtersieb 12, 12' vorteilhaft einsetzbar. Auf das Filtersieb 12, 12' kann jedoch bei Bedarf zurückgegriffen werden, wenn im Fluid mitgerissene Schmutzpartikel im Bereich des Schlauchanschlusses 3 ausgefiltert werden sollen.

Das Filtersieb 12, 12' weist an seinem dem Schlauchanschluss 3 zugewandten Stirnendbereich zumindest ein Halteelement auf, das mit einer innenliegenden Halterille oder Haltenut 13 den Dichtungshaltekragen 7 am Schlauchanschluss 4 der Schlauchleitungen 1, 1' hintergreift. Dabei ist das Halteelement als ein am Filtersieb 12, 12' angeformter Ringsockel 14 ausgebildet, welcher Ringsockel 14 an dem Ringinnenumfang seiner Ringform die umlaufende Haltenut 13 hat. Das Filtersieb 12, 12' ist am Dichtungshaltekragen 7 lösbar montierbar, indem der als Halteelement dienende Ringsockel 14 mit seiner Haltenut 13 über den umfangsseitig vorstehenden Rand des Dichtungshaltekragens 7 derart übergestülpt wird, dass der Ringsockel 14 den Dichtungshaltekragen 7 hintergreift.

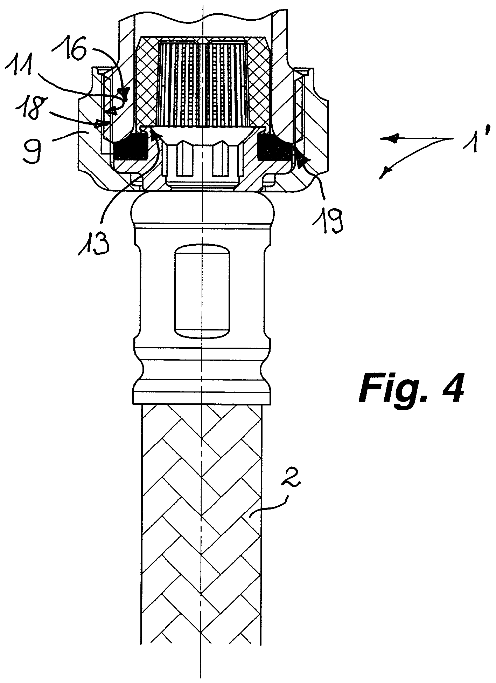

Damit das Filtersieb 12 eine größtmögliche Siebfläche bieten kann, ist das als Hutfilter ausgebildete Filtersieb 12 in den Fig. 1 bis 3 zumindest in dem dem Schlauchanschluss 3 abgewandten Teilbereich kegel- oder - wie hier - kegelstumpfförmig ausgebildet. Dabei wird der maximale Außenumfang des Filtersiebes 12 durch den an dem dem Schlauchanschluss 4 zugewandten Stirnende des Filtersiebes 12 angeordneten und als Halteelement dienenden Ringsockel 14 gebildet. Der Ringsockel 14 ist hier flanschförmig an den kegelstumpfförmigen Teilbereich des Filtersiebes 12 angeformt. Dabei ist der maximale Durchmesser des Filtersiebes 12 im Bereich des Ringsockels 14 so bemessen, dass der Dichtring 10 einen zwischen dem Ringsockel 14 des Filtersiebes 12 und dem Innenumfang der Überwurfmutter angeordnete Ringzone 15 aufweist, an welche Ringzone 15 ein ring- oder hülsenförmiges Stirnende 19 des benachbarten Leitungsabschnitts dicht anlegbar ist.
Das Filtersieb 12' der in den Fig. 4 bis 6 gezeigten Schlauchleitung 1' weist einen Teilbereich auf, der die im Wesentlichen zylindrische Filterfläche hat. Das Filtersieb 12' der in den Fig. 4 bis 6 gezeigten Schlauchleitung 1' steht mit seinem die Filterfläche aufweisenden Teilbereich in den lichten Schlauchquerschnitt der benachbarten Schlauchleitung vor. Damit ein ausreichender Abstand zwischen dem die Filterfläche aufweisenden Teilbereich des Filtersiebes 12' und dem Schlauchinnenumfang der benachbarten Schlauchleitung sichergestellt ist, sind am Außenumfang des Filtersiebes 12', 12' im Bereich der Filterfläche, sich achsparallel zur Sieb-Längsachse erstreckende leistenförmige Abstandhalter 20 vorgesehen, die vorzugsweise gleichmäßig über den Umfang des Filtersiebes 12' verteilt angeordnet sind. Diese leistenförmigen Abstandhalter 20 erstrecken sich von der zuströmseitigen Stirnfläche des Filtersiebes bis zu dem Ringsockel 14. Der sich bis zu den Längsrändern der Abstandhalter 20 erstreckende Radius des Filtersiebes 12' ist so bemessen, dass das Filtersieb 12' mit seinen Abstandhaltern 20 in den lichten Schlauchquerschnitt der dem Schlauchanschluss der Schlauchleitung 1' gegenüberliegenden Schlauchleitung eingesetzt werden kann. Um die bereitgestellte Siebfläche des Filtersiebes 12' noch zusätzlich zu erhöhen, kann es zweckmäßig sein, wenn auch die zuströmseitige Stirnfläche 21 des Filtersiebes 12' eine Siebstruktur mit einer Vielzahl von Durchflusslöchern aufweist.

Die hier dargestellte Schlauchleitung 1, 1' ist insbesondere mit dem am Schlauchanschluss 4 montierten Filtersieb 12, 12' vielseitig einsetzbar. Dabei wird eine Ausführung bevorzugt, bei welcher die Schlauchleitung 1, 1' eine sanitäre Schlauchleitung 1 ist, die eine Auslaufarmatur oder dergleichen Wasserverbrauchsstelle mit einem wandseitig montierten Eckventil verbindet.

### Bezugszeichenliste

- 1, 1': Schlauchleitung
- 2: Schlauch
- 3: Schlauchende
- 4: Schlauchanschluss
- 5: Anschlussstutzen
- 6: zweiter Schlauchanschluss-Teilbereich
- 7: Dichtungshaltekragen
- 8: Ringflansch
- 9: Überwurfmutter
- 10: Dichtring
- 11: Befestigungsgewinde
- 12, 12': Filtersieb
- 13: Haltenut
- 14: Ringsockel
- 15: Ringzone am Dichtring 10
- 16: Schlauchanschluss
- 18: Gegengewinde
- 19: Stirnende
- 20: Abstandhalter
- 21: Stirnfläche

## Patentansprüche

1. Schlauchleitung (1, 1') mit einem flexiblen Schlauch (2), mit einem hülsenförmigen Schlauchanschluss (3), der mit einem als Anschlussstutzen (4) ausgebildeten ersten Schlauchanschluss-Teilbereich durch eine, an einem Stirnende (3) des Schlauches (2) vorgesehene Schlauchöffnung hindurch in einen angrenzenden Schlauchendbereich des Schlauches (2) vorsteht und der (4) einen über das Stirnende (3) des Schlauches (2) vorstehenden zweiten Schlauchanschluss-Teilbereich (6) hat, welcher (6) an seinem freien Stirnende einen umlaufenden und umfangsseitig vorstehenden Dichtungshaltekragen (7) aufweist, wobei am Umfang des zweiten Schlauchanschluss-Teilbereiches (6) ein Ringflansch (8) vorgesehen ist, den eine Überwurfmutter (9) hintergreift und zwischen dem und dem Dichtungshaltekragen (7) ein Dichtring (10) vorgesehen ist, **dadurch gekennzeichnet, dass** die Schlauchleitung (1, 1') ein Filtersieb (12, 12') hat, das (12, 12') an seinem dem Schlauchanschluss (4) zugewandten Stirnendbereich am Dichtungshaltekragen (7) des Schlauchanschlusses (4) montiert ist.

2. Schlauchleitung nach Anspruch 1, **dadurch gekennzeichnet, dass** das Filtersieb (12, 12') als Hutfilter ausgebildet ist und/oder außenumfangsseitig eine zylindrische Filterfläche aufweist.

3. Schlauchleitung nach Anspruch 1 oder 2, **dadurch gekennzeichnet, dass** das Filtersieb (12, 12') an seinem dem Schlauchanschluss (4) zugewandten Stirnendbereich zumindest ein Halteelement hat, das mit einer innenliegenden Halterille oder Haltenut (13) den Dichtungshaltekragen (7) hintergreift.

4. Schlauchleitung nach Anspruch 3, **dadurch gekennzeichnet, dass** das Halteelement als ein am Filtersieb (12, 12') angeformter Ringsockel (14) ausgebildet ist, der (14) an dem Ringinnenumfang seiner Ringform die umlaufende Haltenut (13) hat.

5. Schlauchleitung nach einem der Ansprüche 1 bis 4, **dadurch gekennzeichnet, dass** das Filtersieb (12, 12') am Dichtungshaltekragen (7) lösbar montierbar ist.

6. Schlauchleitung nach einem der Ansprüche 2 bis 5, **dadurch gekennzeichnet, dass** das als Hutfilter ausgebildete Filtersieb (12) zumindest in einem dem Schlauchanschluss (4) abgewandten Teilbereich kegel- oder kegelstumpfförmig ausgebildet ist.

7. Schlauchleitung nach einem der Ansprüche 2 bis 6, **dadurch gekennzeichnet, dass** am Außenumfang des eine zylindrische Filterfläche aufweisenden Filtersiebes (12') Abstandhalter (20) angeformt sind.

8. Schlauchleitung nach einem der Ansprüche 4 bis 7, **dadurch gekennzeichnet, dass** der Ringsockel (14) flanschförmig an das Filtersieb (12, 12') angeformt ist.

9. Schlauchleitung nach einem der Ansprüche 4 bis 8, **dadurch gekennzeichnet, dass** der maximale Durchmesser des Filtersiebes (12) im Bereich des Ringsockels (14) so bemessen ist, dass der Dichtring (10) eine zwischen dem Ringsockel (14) des Filtersiebes (12) und dem Innenumfang der Überwurfmutter (9) angeordnete Ringzone (15) aufweist, an welche Ringzone (15) ein ring- oder hülsenförmiges Stirnende eines benachbarten Leitungsabschnitts dicht anlegbar ist.

10. Schlauchleitung nach einem der Ansprüche 1 bis 9, **dadurch gekennzeichnet, dass** die Schlauchleitung eine sanitäre Schlauchleitung ist, die eine Auslaufarmatur oder dergleichen Wasserverbrauchsstelle mit einem Eckventil verbindet.

11. Filtersieb (12, 12') für eine Schlauchleitung (1, 1') nach Anspruch 1, insbesondere für eine Schlauchleitung (1, 1') gemäß zumindest einem der Ansprüche 1 bis 10.
